# EUROPÄISCHE PATENTSCHRIFT

(11) **EP 1 751 041 B1**
(45) Veröffentlichungstag und Bekanntmachung des Hinweises auf die Patenterteilung: **24.02.2016**
(21) Anmeldenummer: 05736897.9
(22) Anmeldetag: 20.04.2005
(51) Int. Cl.: B65G 53/14

(54) **VERFAHREN UND VORRICHTUNG ZUR INERTISIERUNG VON VAKUUMFÖRDERERN**
METHOD AND DEVICE FOR RENDERING VACUUM CONVEYORS INERT
PROCEDE ET DISPOSITIF D'INERTISATION DE TRANSPORTEURS SOUS VIDE

(30) Priorität: 20.04.2004 DE 102004019703
(43) Veröffentlichungstag der Anmeldung: 14.02.2007
(73) Patentinhaber: Volkmann GmbH, 59494 Soest (DE)
(72) Erfinder: VOLKMANN, Thilo, 59494 Soest (DE)
(74) Vertreter: Grosse Schumacher Knauer von Hirschhausen
(86) Internationale Anmeldenummer: PCT/EP2005/004229
(87) Internationale Veröffentlichungsnummer: WO 2005/102882

(56) Entgegenhaltungen:
- EP-A- 0 630 838
- WO-A-83/03593
- US-A- 2 509 984
- US-A- 3 822 919
- US-A1- 2003 077 128

## Beschreibung

Die Erfindung betrifft ein Verfahren zur Inertisierung von Vakuumförderern, die mindestens eine Einsaugeinrichtung, eine Entleereinrichtung, einen Abscheidebehälter, eine Vakuumpumpeneinrichtung und Mittel zum Einströmen von Inertfluid in den Abscheidebehälter aufweisen, sowie einen entsprechend ausgestatteten inertisierbaren Vakuumförderer.

### HINTERGRUND DER ERFINDUNG

Vakuumförderer transportieren Material Pulver, Granulate, Stäube, Tabletten, Kleinteile usw. im Sauggasstrom, in der Regel Luft oder Inertgas.

Das Material wird von einer Aufgabestelle z.B. mit Handsaugrohr, Aufgabetrichter o.ä. angesaugt, durch eine Schlauch- oder Rohrleitung transportiert und gelangt über eine Einsaugöffnung in den Vakuumförderer. Im Vakuumförderer trennt, in der Regel durch Fliehkräfte und Sedimentation unterstützt, ein eingesetztes Filterelement das transportierte Material vom Sauggas. Das transportierte Material wird in dem Abscheidebehälter des Vakuumförderers gesammelt. Der gefilterte Sauggasstrom verläßt den Abscheidebehälter und durchströmt die den Förderprozeß antreibende Vakuumpumpe, die üblicherweise direkt auf dem Oberteil des Vakuumförderers oder in dessen unmittelbarer Umgebung fest installiert und - auch unabhängig von der Umweltentlastung - vor Verschmutzung zu schützen ist. Nach erfolgtem Füllvorgang des Abscheidebehälters wird die Vakuumpumpe angeschaltet oder der Sauggasstrom durch ein auf der gefilterten Rein- Gasseite angebrachtes Ventil zwischen Abscheidebehälter und Vakuumpumpe unterbrochen.

Bei einem Standard-Vakuumförderer öffnet nun ein unten im Abscheidebehälter angebrachtes Entleerventil und das transportierte Material fällt durch die Entleeröffnung aus dem Abscheidebehälter heraus.

Brückenbildende Materialien können hilfsweise fluidisiert oder mit Überdruck aus dem Abscheidebehälter herausgedrückt werden. Der Filter wird mittels Gegenblasung von der Reingasseite her vom anhaftenden Filterkuchen gereinigt. Die Dauer der einzelnen Saug- und Entleertakte wird üblicherweise über eine Taktsteuerung mit einstellbaren Saug- und Entleerzeiten geregelt. Saug- und Entleerzeiten sind bei Vakuumförderern üblicherweise relativ kurz und betragen in der Regel jeweils nur wenige Sekunden. Da der Filterkuchen sehr häufig abgereinigt werden kann, erlaubt diese kurze Taktung eine äußerst kompakte Bauform mit extrem kleinen Filterflächen im Vergleich zur Anströmgeschwindigkeit in üblichen Luft-Filteranlagen.

Fördert man Feststoffe im Sauggasstrom, so kommt es aufgrund der Kontakte der einzelnen Materialteilchen untereinander sowie aufgrund der Berührungen mit Förderleitungen zu Ladungstrennungen. Dabei laden sich das Material sowie die berührten Oberflächen elektrostatisch auf, so daß sich Zündrisiken durch verschiedene elektrische Entladungsformen für entzündliche Feststoffe oder vorhandene brennbare Gase sowie deren Gemische ergeben. Diesem Effekt kann man bei den Vakuumförderern durch geeignete Erdungsmaßnahmen entgegenwirken. Insbesondere haben sich komplett durchgängig elektrisch leitfähige Abscheidebehälterlösungen durchgesetzt. Schlauchleitungen sollten mit Drahtspiralen ausgerüstet sein, welche an beiden Enden geerdet werden bzw. metallisch über eine Klemme mit dem Abscheidebehälter verbunden sind. Da im Förderer selbst alle elektrisch leitenden Teile untereinander elektrisch leitend verbunden sind und geerdet werden, kann das Risiko der Funkenentladung im Förderer minimiert und nahezu ausgeschlossen werden.

Jedoch verbleibt auf dem geförderten Material selbst eine Ladung, die nur langsam über die Behälterwand des Abscheiders bzw. über die Luftfeuchtigkeit abgebaut werden kann. Auch vom am Filterelement des Abscheiders anhaftenden Filterkuchen geht ein Explosionsrisiko aus - die Oberflächenladungen können bei genügend großen Ladungsmengen zu sogenannten Büschelentladungen führen.

Büschelentladungen sind nach heutigem Stand der Wissenschaft für Feststoffe mit einer Mindestzündenergie MZE von mehr als 1 mJ nicht zündfähig, so daß sich Vakuumförderer für Feststoffe mit einer MZE größer als 1 mJ generell einsetzen lassen. Sicherheitshalber beschränkt man jedoch die Stoffmenge je Fördertakt auf eine Masse von ca. 10kg, um größere Ladungsansammlungen zu vermeiden.

Sind jedoch in der Umgebung brennbare bzw. einen Brennvorgang unterstützende Gase, wie beispielsweise Sauerstoff, vorhanden, reichen meist schon weit geringere Energien aus, diese Gase zu entzünden. In diesen Fällen wird regelmäßig eine Inertisierung als Explosionsschutzmaßnahme gewählt. Dabei wird insbesondere der Sauerstoffgehalt auf ein für die jeweilige Anwendung unkritisches Niveau reduziert und durch ein geeignetes Inertfluid ersetzt. Als Beispiel seien N₂, CO₂, oder Edelgase erwähnt.

Bei einer aus dem Stand der Technik bekannten Inertisierungsverfahren bei Vakuumförderern gemäß EP 0 937 004 B1 wird das Material von einer Aufgabestelle in den Abscheidebehälter des Förderers gesaugt, wird die Einsaugöffnung des Vakuumförderers verschlossen und wird der Abscheidebehälter des Förderers auf ein ausreichend hohes Vakuum evakuiert. Anschließend wird die Vakuumpumpeneinrichtung durch ein Ventil von der Abscheidebehälter getrennt und der Abscheidebehälter von der Reingasseite des Filters her inertisiert.

Um sicherzustellen, daß ein nahezu vollständiger Gasaustausch stattgefunden hat und somit der Sauerstoffgehalt auf ein unkritisches Niveau reduziert wurde, hat sich bei den bekannten Verfahren ein dreifach aufeinander folgender Inertisierungsprozeß durchgesetzt. Dies bedeutet, daß nach erfolgter Einsaugung des Materials der Abscheidebehälter je dreimal evakuiert und inertisiert wird, um den Gasaustausch insbesondere oberhalb des abgeschiedenen Materials sicherzustellen. Anschließend wird das Material unter Stickstoffbeschleierung ausgetragen. Ein Nachteil der bisherigen Verfahren liegt also darin, daß zum Sicherstellen eines unkritischen Sauerstoffgehalts in dem in dem Abscheidebehälter vorhandenen Gas oder Fluid eine zeitintensive mehrfach Inertisierung stattfinden muß.

Es wurde nun festgestellt, daß das oberhalb des abgeschiedenen Materials in den Abscheidebehälter einströmende Inertfluid mit dem Volumen des abgeschiedenen Materials nur wenig wechselwirkt und das Risiko besteht, daß der in Lücken und/oder Porenvolumen des abgeschiedenen Materials vorhandene Sauerstoff mit Hilfe der beschriebenen Inertisierungsprozesse gar nicht oder nur unvollständig mit dem Inertfluid ausgetauscht wird.

Aus US 2003/0077128 A1 ist ein Vakuumförderer bekannt, bei dem zu förderndes Material aus einem Quellenbehälter mittels eines inerten Transportgases über ein Transportrohr zu einem Arbeitsbehälter transportiert wird, in dem sich das Transportgas vom zu fördernden Material trennt und das zu fördernde Material in einen Abscheidebehälter fällt.

Auch bei der WO 83/03593 wird ein inertes Transportgas verwendet, um zu förderndes Material in fluidisiertem Zustand von einem Behälter zu einem nachgelagerten Behälter zu transportieren.

### DIE ERFINDUNG

Davon ausgehend liegt der Erfindung die Aufgabe zugrunde, ein Verfahren und eine Vorrichtung zur Inertisierung von Vakuumförderern bereitzustellen, welches sicher stellt, daß der gesamte Abscheidebehälter und insbesondere die Umgebung des abgeschiedenen Materials nahezu vollständig inertisiert wird.

Zur Lösung dieser Aufgabe wir ein Verfahren der eingangs bezeichneten Art vorgeschlagen, bei dem ein Inertfluid während der Inertisierung unterhalb der freien Oberfläche eines abgeschiedenen Materials in den mindestens einen Abscheidebehälter eingeströmt wird.

Der Grundgedanke, das in dem Abscheidebehälter vorhandene Material mit einem Inertfluid zu durchströmen, kann in vielfacher Weise verwirklicht werden. In jedem Fall wird erreicht, daß der Austausch des brennbaren Gases oder des Sauerstoffs mit dem Inertfluid nicht nur oberhalb des abgeschiedenen Materials stattfindet, sondern daß, insbesondere aufgrund eines Druckunterschiedes, das abgeschiedene Material, insbesondere von unten nach oben, von dem Inertfluid durchströmt wird, wobei der gesamte Inertisierungsprozeß, vorzugsweise, durch ein kontinuierliches Einströmen, sowie ein Evakuieren des Inertfluids bestimmt wird. Durch die Erfindung können unter anderem ... Mehrfachzyklen zur Inertisierung des Abscheidebehälters eingespart und der Vakuumförderungsprozeß deutlich beschleunigt werden.

Um einen geeigneten Differenzdruck aufzubauen und gleichzeitig das brennbare Gas und/oder den Sauerstoff aus dem Abscheidebehälter zu entfernen, wird von der insbesondere oberhalb des abgeschiedenen Materials angebrachten Vakuumpumpeneinrichtung während der Inertisierung in dem mindestens einen Abscheidebehälter ein Druck erzeugt oder aufrecht gehalten, der unterhalb des Inertfluiddruckes liegt, oder aber der Speisedruck der Inertisiervorrichtung wird ausreichend hoch gewählt, so daß bei abgeschalteter und frei durchströmbarer Vakuumpumpeneinrichtung bzw. einem zuschaltenden Bypassventil eine ausreichende Durchströmung bzw. Fluidisierung des geförderten Produktes vorliegt.

Um eine platzsparende Anordnung der Inertfluidzuleitung und einen insbesondere wirkungsvollen Explosionsschutz zu ermöglichen, wird das Inertfluid in unmittelbarer Nähe, insbesondere oberhalb, der Entleeröffnung in den mindestens einen Abscheidebehälter eingeströmt.

Um eine nahezu vollständige Durchströmung des abgeschiedenen Materials und des restlichen Volumens des Abscheidebehälters mit dem Inertfluid, sowie des Filterelements und des an dem Filterelement anbackenden Filterkuchens zu gewährleisten, durchströmt das mittels einer, insbesondere ventilgesteuerten, Leitung in den Abscheidebehälter eingeströmte Inertfluid durch den Filter in Richtung Reingasseite, wo es aus dem Abscheidebehälter austritt.

Um die Zeit für die Inertisierung möglichst kurz zu halten und die dazu notwendigen Arbeitsschritte zu reduzieren, kann die Inertisierung im Rahmen eines Prozesses stattfinden, welcher durch ein kontinuierliches Einströmen des Inertfluids und durch die gleichzeitig kontinuierliche Evakuierung des Abscheidebehälters gekennzeichnet ist.

Um über den Gehalt an insbesondere Sauerstoff während der Inertisierung permanent informiert zu sein und diese Informationen gegebenenfalls für die Steuerung der Inertisierung zu verwenden, wird, insbesondere in einem Bereich der Reingasseite, die Sauerstoff-Konzentration des in dem mindestens einen Abscheidebehälter vorhandenen Fluids gemessen.

Um möglichst flexibel einsetzbar zu sein, ist das erfindungsgemäße Verfahren in geeigneter Weise mit einem konventionellen, nicht das abgeschiedene Material, sondern insbesondere das Filterelement aus Richtung der Reingasseite durchströmenden Inertisierungsschritt kombinierbar.

Ein weiterer Aspekt der Erfindung besteht darin, einen Vakuumförderer bereitzustellen, der ein gründliches Inertisieren des Abscheidebehälters gewährleistet und sicher stellt, daß insbesondere das abgeschiedene Material nahezu vollständig der Inertisierung unterworfen wird.

Zur Lösung dieser Aufgabe wir ein Vorrichtung der eingangs bezeichneten Art vorgeschlagen, bei der die Mittel zum Einströmen von Inertfluid unterhalb der freien Oberfläche des abzuscheidenden Materials an und/oder in dem mindestens einen Abscheidebehälter vorgesehen sind.

Um ein kontrolliertes und effektives Einströmen des Inertfluid in den Abscheidebehälter zu gewährleisten, sind die Mittel zum Einströmen des Inertfluids als Fluidisierdüsen ausgebildet.

Um das Einströmen des Inertfluids zu jedem Zeitpunkt zu kontrollieren und gegebenenfalls die Menge an Inertfluid einstellen zu können, sind die Einströmmittel führenden Leitungen mittels Ventilen steuerbar.

Um die Einströmmittel für Inertfluid im Hinblick auf das Durchströmen des abgeschiedenen Materials in eine optimale Position zu bringen und dabei zusätzlich eine kompakte Bauform zu gewährleisten, sind die Einströmmittel in und/oder an der Behälterwand und/oder in der zu der Entleervorrichtung gehörenden Entleerklappe vorgesehen.

Um das Inertfluid im Hinblick auf das Durchströmen des abgeschiedenen Materials in eine möglichst optimale Position zu bringen, werden die Bereiche der Behälterwand, in denen die Fluidisierdüsen vorgesehen sind, nach unten schräg zulaufend angeordnet, vorzugsweise mit einem Öffnungswinkel von 30° - 75°. Auf diesen trichterförmigen Bereich kann aber insbesondere bei kleineren Behälterdurchmessern von bis zu 450mm verzichtet werden, so daß sich eine zylindrische Fläche ergibt, auf der die Inertisiereinrichtungen angeordnet sind. Der Behälter ist dann nach unten hin von einem den gesamten Behälterdurchmesser verschließenden Entleerventil abschließbar.

Um ein möglichst wirksames Durchströmen des abgeschiedenen Materials zu gewährleisten, werden mehrere Einströmmittel, in einer Struktur angeordnet, die der Geometrie des Abscheidebehälters, insbesondere dessen Umfangsform, entspricht, insbesondere in einer Ringstruktur. Bei kleinen Behälterdurchmessern ist erfindungsgemäß auch ein einzelnes, an nur einer Seite angebrachtes Einströmmittel möglich,

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so daß die in dem Anwendungsgebiet bekannten Auswahlkriterien uneingeschränkt Anwendung finden können.

Weitere Einzelheiten, Merkmale und Vorteile des Verfahrens der Erfindung ergeben sich aus den Unteransprüchen sowie aus der nachfolgenden Beschreibung der zugehörigen Zeichnung, in der beispielhaft anhand eines Ausführungsbeispiels das erfindungsgemäße Verfahren zur Inertisierung von Vakuumförderern dargestellt ist.

Im einzelnen zeigt die Zeichnung:

### AUSFÜHRUNGSBEISPIELE

- Fig.1: ein Blockschaltbild in schematisierter Vertikalschnittansicht von einem Vakuumförderer mit Abscheidebehälter, Vakuumpumpeneinrichtung und Einsaugeinrichtung.
- Fig. 2: eine dreidimensionale Teilschnittansicht eines Vakuumförderers mit vollständig zylindrischem Abscheidebehälter und mit Einströmmitteln in der Behälterwand sowie einer Entleerklappe in Form eines Scheibenventils.
- Fig. 3: eine dreidimensionale Teilschnittansicht eines Vakuumförderers mit nach unten schräg geneigtem Abscheidebehälter und mit in einer einseitig zu öffnenden Klappe eingebaute Einströmmittel.

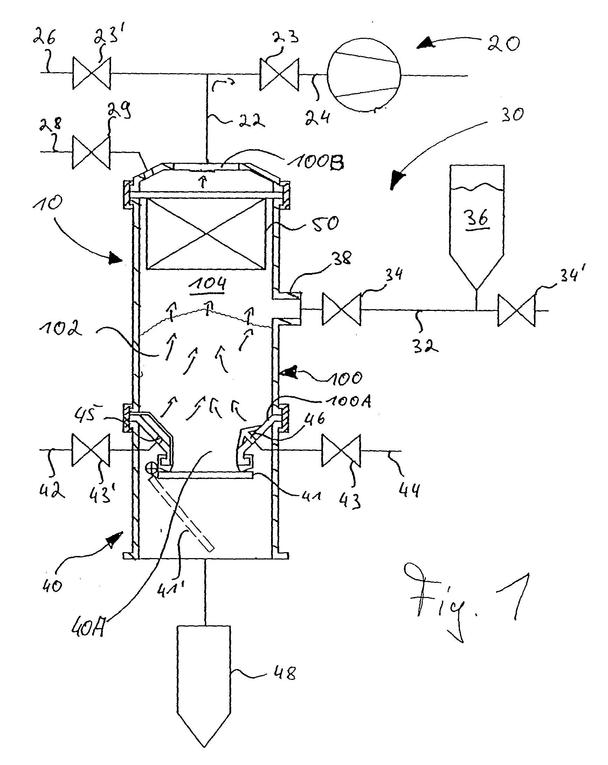

Das aus Figur 1 ersichtliche Blockschaltbild eines Vakuumförderers 10 umfaßt einen Abscheidebehälter 100, eine Vakuumpumpeneinrichtung 20, eine Einsaugeinrichtung 30 sowie eine Entleereinrichtung 40. Die Einsaugeinrichtung besteht im wesentlichen aus einer Leitung 32, die mittels Ventilen 34, 34' gesteuert werden kann und zum anzusaugenden Material 36 führt, wobei die Verbindung zum Abscheidebhälter 100 mittels einer Einsaugöffnung 38 hergestellt wird. Das zum Saugen notwendige Vakuum wird durch die Vakuumpumpeneinrichtung 20 erzeugt, die mittels Leitungen 22, 24 über ein Ventil 23 steuerbar, mit einer Saugöffnung 100B in dem oberen Teil des Abscheidebehälters 100 fluiddicht verbunden ist. An die Leitung 22 schließt sich eine weitere, mittels Ventil 23' gesteuerte Leitung 26 an, deren Funktion unten beschrieben wird.

Innerhalb des Abscheidebehälters 100 filtert ein Filterelement 50 das angesaugte Förderfluid von Staub oder Partikeln, so daß diese nicht in die Vakuumpumpeneinrichtung 20 gelangen können. In dem oberen Teil des Abscheidebehälters 100 ist eine weitere Öffnung vorgesehen, an die sich eine mittels Ventil 29 gesteuerte Leitung 28 anschließt, die das Fluid innerhalb des Abscheidebehälters 100 an ein entsprechendes Meßgerät weiterleitet, mit dessen Hilfe beispielsweise der Sauerstoffgehalt ermittelt werden kann. Ausreichend ist auch nur eine Öffnung im Behälterdeckel, die alle anderen Einrichtungen über eine Sammelleitung verbindet. Wartungs- und Instandsetzungsarbeiten am Abscheider des Vakuumförderers können hiermit vereinfacht werden (kleinere zu hantierende Massen). Im unteren Bereich des Abscheidebehälters befindet sich eine Entleereinrichtung 40, die in dem in Figur 1 dargestellten Ausführungsbeispiel als schwenkbare Entleerklappe 41 ausgebildet ist, die geschlossen und geöffnet 41' werden kann. In unmittelbarer Nähe zu der Entleeröffnung 40A befinden sich von Ventilen 43, 43' gesteuerte Leitungen 42, 44, die an beispielsweise der Behälterwand 100A in Fluidisierdüsen 45, 46 enden. Die Position dieser Düsen 45, 46 ist so gewählt, daß ihre Austrittsöffnungen unterhalb der freien Oberfläche des abgeschiedenen Materials liegen und so ein durch die Leitungen 42, 44 strömendes und durch die Düsen 45, 46 austretendes Inertfluid aufgrund des etwaigen Inertfluiddrucks und/oder aufgrund des von der Vakuumpumpeneinrichtung 20 erzeugten Vakuums das Volumen des abgeschiedenen Materials 102 so gut wie vollständig durchströmt und anschließend das sich oberhalb des abgeschiedenen Materials 102 befindliche und einen Restsauerstoffgehalt aufweisendes Fluid 104 im Kammervolumen verdrängt, sowie das Filterelement 50 durchströmt, um schließlich über seine Auslaßöffnung 100B den Abscheidebehälter 100 zu verlassen. Dieser Inertisierungsvorgang kann kontinuierlich erfolgen. Der Strömungsverlauf ist in Figur 1 durch Pfeile angedeutet. Erst nach erfolgter Vakuumspülung mit dem Inertfluid, deren Fortschritt anhand einer Restsauerstoffgehaltsmessung bestimmt werden kann, öffnet die Entleereinrichtung 40 und das abgeschiedene Material 102 gelangt beispielsweise in einen Transportbehälter 48.

Um zu einem gegebenen Zeitpunkt das Filterelement 50 mittels Gegenblasimpuls zu reinigen, kann die über das Ventil 23' gesteuerte Leitung 26 benutzt werden. Durch ihr kann während des oben beschriebenen Inertisierungsprozesses optional zusätzlich Inertfluid zugeführt werden.

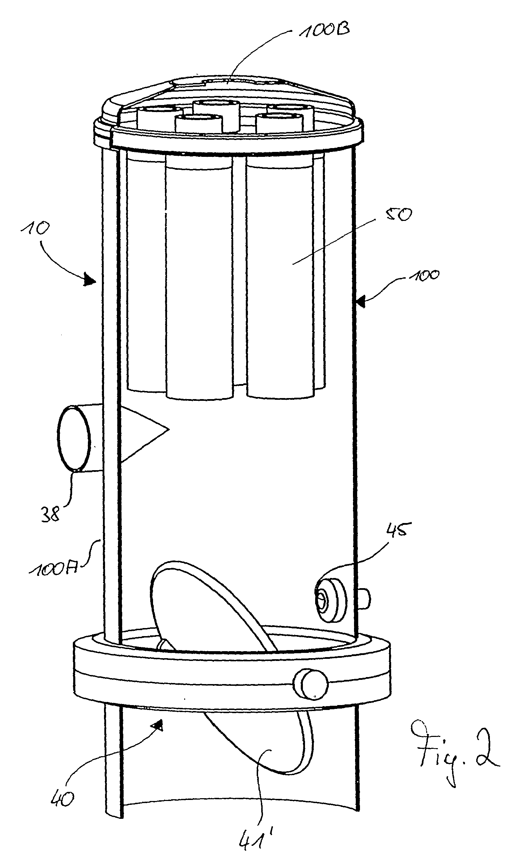

In Fig. 2 ist eine modifizierte Ausführungsform eines entleerten Vakuumförderer 10 vereinfacht dreidimensional in Teilschnittansicht dargestellt, bei dem der Abscheidebehälter 100 vollständig zylindrisch ausgestaltet ist und keine Verengung insbesondere im Bereich, in dem die Einströmmittel vorgesehen sind, aufweist. Diese Ausführung ist insbesondere aber nicht ausschließlich für kleinere Behälter mit einem Durchmesser von bis zu 450mm empfehlenswert. Zusätzlich ist eine modifizierte Entleerklappe 41 dargestellt, die aus einem Scheibenventil besteht, welches eine im wesentlichen mittig angeordnete Achse aufweist, mit der die Verschlußplatte drehbar an der Entleereinrichtung 40 befestigt wird. Die Einströmmittel sind oberhalb der Entleereinrichtung 40 in der Behälterwand 100A angeordnet. Die den Innenraum des Abscheidebhälters 100 zu der Auslaßöffnung 100B abgrenzenden Filterelemente 50 sind in der Ausführungsform als eine Mehrzahl von einzelnen Filtereinheiten, wie beispielsweise Filterkerzen oder Filtersäcke, ausgestaltet. Weitere Details, wie beispielsweise Ventilsteuerungen, können analog der Fig. 1 entnommen werden.

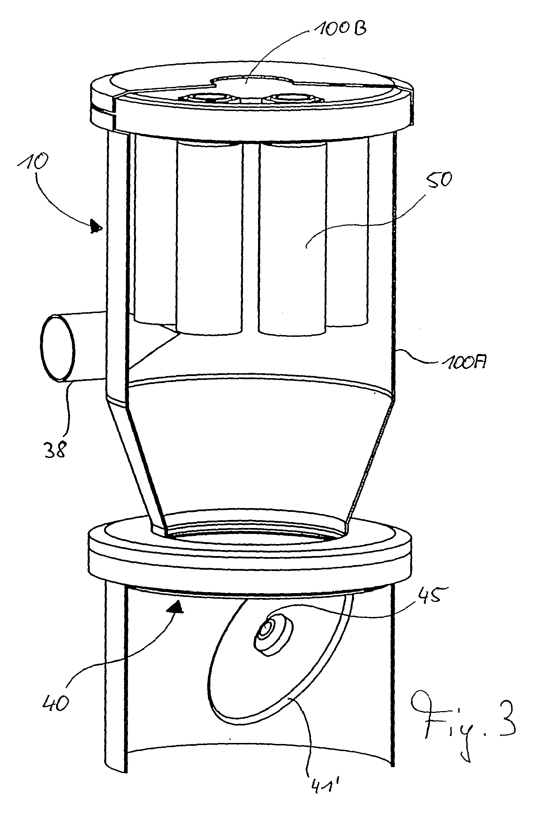

Fig. 3 zeigt vereinfacht in dreidimensionaler Teilschnittansicht eine weitere Ausführungsform, bei der der entleerte Abscheidebehälter 100 im unteren Bereich sich nach unten verjüngt. Eine derartige Ausführung empfiehlt sich insbesondere jedoch nicht ausschließlich für größere Behälter mit einem Durchmesser von mindestens 450mm. Als Öffnungswinkel für den trichterförmigen Bereich hat sich vorzugsweise ein Wert von 30° - 75° erwiesen, wobei jedoch durchaus größere oder kleinere Werte im Sinne dieser Erfindung sind. Als weiteres Merkmal der vorliegenden Erfindung sind bei dieser Ausführungsform die Einströmmittel in der Entleerklappe 41 angeordnet, wobei diese, wie dargestellt, einseitig an der Entleereinrichtung 40 befestigt wird. Weitere Details, wie beispielsweise Ventilsteuerungen, können erneut analog der Fig. 1 entnommen werden.

### Bezugszeichenliste

- 10: Vakuumförderer
- 20: Vakuumpumpeneinrichtung
- 23, 23, 29: Ventil
- 22, 24, 26, 28: Leitung
- 30: Einsaugeinrichtung
- 32: Leitung
- 34, 34': Ventile
- 36: anzusaugendes Material
- 38: Einsaugöffnung
- 40: Entleereinrichtung
- 40A: Entleeröffnung
- 41: Entleerklappe
- 41': Entleerklappe (geöffnet)
- 42, 44: Leitung
- 43, 43': Ventil
- 45, 46: Fluidisierdüsen
- 48: Transportbehälter
- 50: Filterelement
- 100: Abscheidebehälter
- 100A: Behälterwand
- 100B: Auslaßöffnung
- 102: abgeschiedenes Material
- 104: Restsauerstoff aufweisendes Fluid

## Patentansprüche

1. Verfahren zum Inertisieren eines Vakuumförderers mit einer Einsaugeinrichtung (30) zum Einsaugen zu fördernden Materials (36) in einen Abscheidebehälter (100), der über eine Entleereinrichtung (40) entleerbar ist, mittels von einer Vakuumpumpeneinrichtung (20) erzeugbaren Vakuums, **dadurch gekennzeichnet, dass** zum Inertisieren unterhalb der freien Oberfläche eines abgeschiedenen Materials (102) ein Inertfluid In den Abscheidebehälter (100) eingeströmt wird, und dass die Entleereinrichtung (40) nach dem Spülen mit dem Intert-fluid zum Entleeren des Abscheidebehälters (100) betätigt wird.

2. Verfahren zur Inertisierung nach Anspruch 1, **dadurch gekennzeichnet, daß** die insbesondere oberhalb des abgeschiedenen Materials (102) angebrachte Vakuumpumpeneinrichtung (20) während der Inertisierung in dem mindestens einen Abscheidebehälter (100) einen unterhalb des Inertfluiddruckes liegenden Druck im Abscheidebehälter (100) erzeugt oder aufrecht hält.

3. Verfahren zur Inertisierung nach Anspruch 1 oder 2, **dadurch gekennzeichnet, daß** das Inertfluid, insbesondere bei ausgeschalteter Vakuumpumpeneinrichtung (20), mit Druck In den mindestens einen Abscheidebehälter (100) eingeströmt wird.

4. Verfahren zur Inertisierung nach einem der Ansprüche 1 bis 3, **dadurch gekennzeichnet, daß** das Inertfluid in der Nähe der Entleeröffnung (40A) In den mindestens einen Abscheidebehälter (100) eingeströmt wird.

5. Verfahren zur Inertisierung nach einem der Ansprüche 1 bis 4, **dadurch gekennzeichnet, daß** das Inertfluid mittels einer Insbesondere ventilgesteuerten (43, 43') Leitung (44, 45) in den Abscheidebehälter (100) eingeströmt wird, das Filterelement (50) in Richtung Reingasseite durchströmt und durch die Auslaßöffnung (100B) aus dem Abscheidebehälter (100) austritt.

6. Verfahren zur Inertisierung nach einem der Ansprüche 1 bis 5, **dadurch gekennzeichnet, daß** die Inertisierung im Rahmen eines Prozesses stattfindet, welcher sich durch ein kontinuierliches Einströmen des Inartfluids und durch die gleichzeitige kontinuierliche Evakuierung des Abscheidebehälters (100) auszeichnet.

7. Verfahren zur Inertisierung nach einem der Ansprüche 1 bis 6, **dadurch gekennzeichnet, dass** die Sauerstoff-Konzentration oder die Konzentration eines anderen unerwünschten oder nur bedingt erwünschten Fluidbestandteils des In dem mindestens einen Abscheidebehälter (100) vorhandenen Fluids (104) ermittelt wird.

8. Verfahren nach Anspruch 7, **dadurch gekennzeichnet, dass** das Ermitteln der Sauerstoff-Konzentration in einem Bereich der Reingasseite erfolgt.

9. Verfahren nach Anspruch 7 oder 8, **dadurch gekennzeichnet, dass** der Fortschritt des Spülens mit dem Inert-Fluid anhand einer Bestimmung des Restsauerstoffgehalts erfolgt.

10. Verfahren zur Inertisierung nach einem der Ansprüche 1 oder 9, **dadurch gekennzeichnet, daß** es mit einem konventionellen, das abgeschiedene Material (102) nicht durchströmenden sondern Insbesondere das Filterelement (50) aus Richtung der Reingasseite durchströmenden Inertisierungsverfahren kombiniert wird, wobei dieses konventionelle Verfahren insbesondere während der Entleerung des abgeschiedenen Materials (102) geschieht.

11. Inertisierbarer Vakuumförderer mit einer Einsaugeinrichtung (30) zum Einsaugen zu fördernden Materials (36) in einen Abscheidebehälter (100), der über eine Entleereinrichtung (40) entleerbar ist, mittels von einer Vakuumpumpeneinrichtung (20) erzeugbaren Vakuums, und mit Mitteln zum Einströmen von Inertfluid unterhalb der freien Oberfläche abgeschiedenen Materials (102) an und/oder in dem mindestens einen Abscheidebehälter (100), **dadurch gekennzeichnet, dass** den Mitteln zum Einströmen des Inertflulds mittels Ventilen (43, 43') steuerbare Leitungen (42, 44) zugeordnet sind, wobei die Ventile (43, 43') derart steuerbar sind, **dass** die Entleereinrichtung (40) erst nach erfolgtem Spülen mit dem Inertfluid öffnet.

12. Vorrichtung nach Anspruch 11, **dadurch gekennzeichnet, dass** die Mittel zum Einströmen von Inertfluid als Fluidislerdüsen (45, 46) ausgebildet sind.

13. Vorrichtung nach Anspruch 11 oder 12, **dadurch gekennzeichnet, dass** die Einströmmittel in und/oder an der Behälterwand (100A) vorgesehen sind.

14. Vorrichtung nach einem der Ansprüche 11 bis 13, **dadurch gekennzeichnet, dass** mindestens eins der Einströmmittel als Teil einer zu der Entleereinrichtung (40) gehörenden Entleerklappe (41) ausgebildet sind.

15. Vorrichtung nach einem der Ansprüche 11 bis 14, **dadurch gekennzeichnet, dass** ein Bereich der Behälterwand (100A), In dem die Einströmmittel vorgesehen sind, nach unten schräg geneigt verläuft.

16. Vorrichtung nach einem der Ansprüche 11 bis 15, **dadurch gekennzeichnet, dass** die Behälterwand (100A), insbesondere in dem Bereich, in dem die Einströmmittel vorgesehen sind, zylindrisch ohne Verengung ausgebildet ist.

17. Vorrichtung nach einem der Ansprüche 11 bis 16, **dadurch gekennzeichnet, dass** mehrere Einströmmittel in einer Struktur angeordnet sind, die der Geometrie der Abscheidebehälters (100) entspricht, Insbesondere dessen Umfangsform, Insbesondere in einer Ringstruktur.

18. Vorrichtung nach einem der Ansprüche 11 bis 17, **gekennzeichnet durch** eine dem Abscheidebehälter (100) fluidisch zugeordnete Leitung (28), welche das Fluid Innerhalb des Abscheidebehälters (100) an ein Gerät welterleitet, mit dessen Hilfe der Sauerstoffgehalt ermittelbar Ist.

19. Vorrichtung nach Anspruch 18, **dadurch gekennzeichnet, dass** anhand der Restsauerstoffgehaltsbestimmung der Fortschritt des Spülens mit dem Inertfluid bestimmbar ist.

## Claims

1. A method for rendering a vacuum conveyor inert with an intake device (30) for the intake of material (36) to be conveyed into a separating vessel (100), which can be emptied via an emptying device (40), by means of a vacuum generated by a vacuum pump device (20), **characterised in that**, for the inertisation, an inert fluid is fed into the separating vessel (100) below the free surface of a separated material (102), and that the emptying device (40), after the rinsing with the inert fluid, is actuated for the emptying of the separating vessel (100).

2. The method for inertisation according to claim 1, **characterised in that** the vacuum pump device (20), fitted in particular above the separated material (102), generates or maintains a pressure in the separating vessel (100) that lies below the inert fluid pressure during the inertisation in the at least one separating vessel (100).

3. The method for inertisation according to claim 1 or 2, **characterised in that** the inert fluid is fed, in particular with the vacuum pump device (20) switched off, under pressure into the at least one separating vessel (100).

4. The method for inertisation according to any one of claims 1 to 3, **characterised in that** the inert fluid is fed into the at least one separating vessel (100) in the proximity of the emptying opening (40A).

5. The method for inertisation according to any one of claims 1 to 4, **characterised in that** the inert fluid is fed into the separating vessel (100) by means of an, in particular, valve-controlled (43, 43') line (44, 45), flows through the filter element (50) in the direction of the clean gas side and exits the separating vessel (100) through the outlet opening (100B).

6. The method for inertisation according to any one of claims 1 to 5, **characterised in that** the inertisation takes place in a process which is **characterised by** continuous feeding of the inert fluid and by the simultaneous continuous evacuation of the separating vessel (100).

7. The method for inertisation according to any one of claims 1 to 6, **characterised in that** the oxygen concentration or the concentration of another undesirable or only conditionally desirable fluid component of the fluid (104) present in the at least one separating vessel (100) is ascertained.

8. The method according to claim 7, **characterised in that** the ascertainment of the oxygen concentration takes place in a region of the clean gas side.

9. The method according to claim 7 or 8, **characterised in that** the progress of the rinsing with the inert fluid takes place on the basis of a determination of the residual oxygen content.

10. The method for inertisation according to any one of claims 1 or 9, **characterised in that** it is combined with a conventional method for inertisation which, rather than conducting a flow through the separated material (102), conducts a flow in particular through the filter element (50) from the direction of the clean gas side, wherein this conventional method takes place in particular during the emptying of the separated material (102).

11. A vacuum conveyor that can be rendered inert with an intake device (30) for the intake of material (36) to be conveyed into a separating vessel (100), which can be emptied via an emptying device (40), by means of a vacuum generated by a vacuum pump device (20), and with means for feeding inert fluid below the free surface of separated material (102) on and/or in the at least one separating vessel (100), **characterised in that** lines (42, 44) controllable by means of valves (43, 43') are assigned to the means for feeding the inert fluid, wherein the valves (43, 43') can be controlled in such a way that the emptying device (40) does not open until after the rinsing with the inert fluid has taken place.

12. The device according to claim 11, **characterised in that** the means for feeding inert fluid are constituted as fluidising nozzles (45, 46).

13. The device according to claim 11 or 12, **characterised in that** the feeding means are provided in and/or on the vessel wall (100A).

14. The device according to any one of claims 11 to 13, **characterised in that** at least one of the feeding means is constituted as part of an emptying flap (41) belonging to the emptying device (40).

15. The device according to any one of claims 11 to 14, **characterised in that** a region of the vessel wall (100A) in which the feeding means are provided runs obliquely inclined downwards.

16. The device according to any one of claims 11 to 15, **characterised in that** the vessel wall (100A), in particular in the region in which the feeding means are provided, is constituted cylindrical without narrowing.

17. The device according to any one of claims 11 to 16, **characterised in that** a plurality of feeding means are disposed in a structure, which corresponds to the geometry of the separating vessel (100), in particular the peripheral shape thereof, in particular in an annular structure.

18. The device according to any one of claims 11 to 17, **characterised by** a line (28) which is assigned fluidically to the separating vessel (100) and which conducts the fluid inside the separating vessel (100) onward to a device, with the aid of which the oxygen content can be ascertained.

19. The device according to claim 18, **characterised in that** the progress of the rinsing with the inert fluid can be determined on the basis of the determination of the residual oxygen content.

## Revendications

1. Procédé d'inertage d'un transporteur sous vide comprenant un dispositif d'aspiration (30) pour aspirer (36) du matériau à transporter dans un récipient de séparation (100) qui peut être vidé par un dispositif de purge (40), au moyen d'un vide pouvant être produit par un dispositif de pompe à vide (20), **caractérisé en ce que** pour inerter en-dessous de la surface libre d'un matériau séparé (102), un fluide inerte est introduit dans le récipient de séparation (100), et que le dispositif de purge (40) est actionné avec le fluide inerte après le rinçage pour purger le récipient de séparation (100).

2. Procédé d'inertage selon la revendication 1, **caractérisé en ce que** le dispositif de pompe à vide (20) placé en particulier au-dessus du matériau séparé (102) produit ou maintient pendant l'inertage dans l'au moins un récipient de séparation (100), une pression dans le récipient de séparation (100) située en-dessous de la pression du fluide inerte.

3. Procédé d'inertage selon la revendication 1 ou 2, **caractérisé en ce que** le fluide inerte, en particulier lorsque le dispositif de pompe à vide (20) ne fonctionne pas, est introduit sous pression dans l'au moins un récipient de séparation (100).

4. Procédé d'inertage selon l'une des revendications 1 à 3, **caractérisé en ce que** le fluide inerte est introduit dans l'au moins un récipient de séparation (100) à proximité de l'ouverture de purge (40A).

5. Procédé d'inertage selon l'une des revendications 1 à 4, **caractérisé en ce que** le fluide inerte est introduit dans le récipient de séparation (100) au moyen d'un conduit (44, 45) en particulier commandé par soupapes (43, 43'), traverse l'élément de filtre (50) en direction du côté de gaz purifié et sort du récipient de séparation (100) par l'ouverture d'évacuation (100B).

6. Procédé d'inertage selon l'une des revendications 1 à 5, **caractérisé en ce que** l'inertage a lieu dans le cadre d'un procédé qui se distingue par une introduction continue du fluide inerte et par l'évacuation simultanée continue du récipient de séparation (100).

7. Procédé d'inertage selon l'une des revendications 1 à 6, **caractérisé en ce que** la concentration en oxygène ou la concentration d'une autre composante fluidique non souhaitée ou seulement souhaitée de façon limitée du fluide (104) présent dans l'au moins un récipient de séparation (100) est calculée.

8. Procédé selon la revendication 7, **caractérisé en ce que** le calcul de la concentration en oxygène a lieu dans une zone du côté de gaz purifié.

9. Procédé selon la revendication 7 ou 8, **caractérisé en ce que** la progression du rinçage avec le fluide inerte a lieu à l'aide d'une détermination de la teneur en oxygène résiduelle.

10. Procédé d'inertage selon l'une des revendications 1 à 9, **caractérisé en ce qu'**il est combiné à un procédé d'inertage conventionnel, ne traversant pas le matériau séparé (102) mais traversant en particulier l'élément de filtre (50) en venant du côté de gaz purifié, sachant que ce procédé conventionnel a lieu en particulier pendant la purge du matériau séparé (102).

11. Transporteur sous vide pouvant être inerté comprenant un dispositif d'aspiration (30) pour aspirer du matériau (36) à transporter dans un récipient de séparation (100) qui peut être purgé par un dispositif de purge (40), au moyen d'un vide pouvant être produit par un dispositif de pompe à vide (20) et comprenant des moyens pour introduire du fluide inerte en-dessous de la surface libre d'un matériau séparé (102) sur et/ou dans l'au moins un récipient de séparation (100), **caractérisé en ce que** des conduits (42, 44) pouvant être commandés par des soupapes (43, 43') sont attribués aux moyens pour introduire le fluide inerte, sachant que les soupapes (43, 43') peuvent être ainsi commandées que le dispositif de purge (40) s'ouvre uniquement une fois le rinçage avec le fluide inerte effectué.

12. Dispositif selon la revendication 11, **caractérisé en ce que** les moyens d'introduction de fluide inerte sont conçus en tant que buses de fluidisation (45, 46).

13. Dispositif selon la revendication 11 ou 12, **caractérisé en ce que** les moyens d'introduction sont prévus dans et/ou sur la paroi du récipient (100A).

14. Dispositif selon l'une des revendications 11 à 13, **caractérisé en ce qu'**au moins un des moyens d'introduction est conçu en tant que partie d'un clapet de purge (41) appartenant au dispositif de purge (40).

15. Dispositif selon l'une des revendications 11 à 14, **caractérisé en ce qu'**une partie de la paroi du récipient (100A) dans laquelle les moyens d'introduction sont prévus, est inclinée vers le bas.

16. Dispositif selon l'une des revendications 11 à 15, **caractérisé en ce que** la paroi du récipient (100A), en particulier dans la partie dans laquelle les moyens d'introduction sont prévus, est cylindrique sans resserrement.

17. Dispositif selon l'une des revendications 11 à 16, **caractérisé en ce que** plusieurs moyens d'introduction sont disposés dans une structure qui correspond à la géométrie du récipient de séparation (100), en particulier la forme de son pourtour, en particulier dans une structure annulaire.

18. Dispositif selon l'une des revendications 11 à 17, **caractérisé par** un conduit (28) attribué de façon fluidique au récipient de séparation (100), qui transfère le fluide à l'intérieur du récipient de séparation (100) à un appareil à l'aide duquel la teneur en oxygène peut être calculée.

19. Dispositif selon la revendication 18, **caractérisé en ce que** la progression du rinçage avec le fluide inerte peut être déterminé à l'aide de la détermination de la teneur en oxygène résiduelle.
